(19) Europäisches Patentamt
European Patent Office
Office européen des brevets

(11) **EP 4 760 541 A1**

(12) **EUROPEAN PATENT APPLICATION**

(43) Date of publication:
**17.06.2026 Bulletin 2026/25**

(21) Application number: **25222428.2**

(22) Date of filing: **11.12.2025**

(51) International Patent Classification (IPC):
*G06F 16/906* (2019.01)

(52) Cooperative Patent Classification (CPC):
**G06F 16/906**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.12.2024 US 202418977773**

(71) Applicant: **Lemon Inc.
Grand Cayman, KY1-1205 (KY)**

(72) Inventors:
• LIU, Mingchao
  **Culver City, 90230 (US)**
• XIONG, Hongyu
  **Los Angeles, 90066 (US)**
• DONG, Xin
  **Culver City, 90230 (US)**

(74) Representative: **Isarpatent
Patent- und Rechtsanwälte PartG mbB
Friedrichstraße 31
80801 München (DE)**

(54) **CLASSIFICATION OF CONTENT COLLECTION USING PROCESS SUPERVISION WITH A CHAIN-OF-THOUGHT REASONING CAPABLE MACHINE-LEARNED MODEL**

(57) Described herein is an implementation of a classification of content collection using process supervision with a chain-of-thought reasoning capable machine-learned (ML) model. In an example aspect, a process supervision system includes processing circuitry and memory storing a content source of a ML model. The content source includes text-labeled content of a first type. The processing circuitry is configured to obtain a collection of multiple first-typed content items of the content source. The collection has text metadata associated therewith. The processing circuitry is further configured to produce supervised fine-tuning (SFT) queries regarding the collection based, at least in part, on one or more of the first-typed content items of the collection and/or the text metadata of the collection. The processing circuitry is still further configured to, based on the SFT queries, assemble a chain-of-thought reasoning request for submission to a chain-of-thought reasoning capable ML classifier.

FIG. 4

**Description**

BACKGROUND

The number of audio, image, and video files captured by users around the world using microphone and camera-equipped devices is very large, and growing. Media content items such as these are typically stored in collections referred to as albums. Understanding what is contained in such albums can be a difficult task. Each media content item may contain item-specific metadata, and the albums themselves can have album-level metadata separate from the individual céontent items, such as album titles, creation dates, sharing permissions, and organizational tags. However, when attempting to understand what is contained in an album, the content-item specific metadata can lead to misclassification as it may not be representative of the album as a whole. Further, album-level metadata is limited in its ability to express detailed qualities and characteristics of the album contents. For this reason, a technical challenge exists to efficiently and accurately classify album contents.

SUMMARY

To address these issues, computing systems and methods are described herein that perform classification of a content collection using process supervision with a chain-of-thought reasoning capable machine-learned (ML) model. In an example aspect, a computing system is provided that includes processing circuitry and memory of a computing device. The memory stores a content source of a machine-learned (ML) model. The content source includes text-labeled content of a first type. The processing circuitry is configured to obtain a collection of multiple first-typed content items of the content source. The collection has text metadata associated therewith. The processing circuitry is further configured to produce supervised fine-tuning (SFT) queries regarding the collection based, at least in part, on one or more of the first-typed content items of the collection and/or the text metadata of the collection. The processing circuitry is still further configured to, based on the SFT queries, assemble a chain-of-thought reasoning request for submission to a chain-of-thought reasoning capable machine-learned (ML) classifier.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

BRIEF DESCRIPTION OF THE DRAWINGS

Computing systems and methods for classification of content collections using process supervision with a chain-of-thought reasoning (CoTR) capable machine-learned (ML) model are described with reference to the following drawings. The same numbers are used throughout the drawings to reference like features and components.

FIG. 1 illustrates a schematic view of a computing system in accordance with an example of the present disclosure.
FIG. 2 illustrates a schematic view of a portion of the computing system of FIG. 1.
FIG. 3 illustrates a schematic view of a process supervision component of the computing system of FIGS. 1 and 2.
FIG. 4 is a flow chart of an example method for CoTR process supervision according to an example embodiment of the present disclosure.
FIG. 5 is a flow chart of an example method for CoTR process supervision with the submission of a machine-learning prompt to a CoTR-capable ML model according to an example embodiment of the present disclosure.
FIG. 6 shows a flowchart of an example method for CoTR process supervision by training a CoTR-capable ML model according to an example embodiment of the present disclosure.
FIG. 7 shows an example computing environment of the present disclosure.

DETAILED DESCRIPTION

In some embodiments, the methods and processes described herein may be tied to a computing system of one or more computing devices. In particular, such methods and processes may be implemented as a computer-application program or service, an application-programming interface (API), a library, and/or other computer-program products.

The computing systems and methods described herein use process supervision to leverage pre-trained machine-learning models-such as large language models (LLMs)-with chain-of-thought reasoning (CoTR) capabilities to accomplish intermediate-level annotation of a collection of like-typed content using supervised fine-tuning (SFT) data involving questions regarding the intermediate-level annotation results of the collection.

Machine-learning models are computer systems trained on data to learn patterns and make predictions or decisions without being explicitly programmed for each specific task. Herein, a machine-learning model (MLM) may be trained or untrained. Once trained (e.g., pre-trained), a machine-learning model may be called a machine-learned model herein and referenced as an "ML model."

A trained Large Language Model (LLM) is a type of ML model. LLMs use transformer architectures and attention mechanisms to excel at translation, summarization, and question-answering tasks. Multimodal Large Language Models (M-LLMs) are LLMs that can recognize and process multiple content types simultaneously, including text, images, audio, and/or video-unlike traditional LLMs, which only work with text. Examples of content types include text, images, audio, or video.

These M-LLMs use specialized encoders for various input types that feed into a unified system, enabling them to make connections across various modes of information. For instance, M-LLMs can analyze an image while answering questions about it or recognize how written instructions relate to visual content. Notable examples include GPT-4V™, Claude 3™, and Gemini™, which can process both text and images.

ML models are often used to label or annotate image content. M-LLMs can perform classification in a wide variety of applications, such as identifying objects and scenes in visual content, assisting medical professionals in analyzing X-rays and surgical recordings, enabling product recognition and video search in retail, supporting content moderation platforms, helping autonomous systems interpret their environment, and facilitating visual question answering for accessibility and education. In each application, the ML models learn patterns from labeled training data to make accurate predictions and generate natural language responses about visual and temporal content.

Often, an ML model with labeled image content may have a curated collection or group of images called an "album." Hierarchically, an album is at a second-tier level (e.g., intermediate level), and the images that it contains are at a lower or first-tier level. Such collections may exist for various reasons, such as training datasets, benchmark collections, and domain-specific galleries (e.g., medical images, artwork, nature photography, and the like). In some instances, a human may manually select members of an album. In other instances, album membership may be automated by training or from a prompt to the ML model.

Consider a scenario with a newly released image album. It may be desirable to categorize that the image album has certain properties of interest, such as originality-whether the images of the album are original (i.e., new). That is, it may be desirable to know an intermediate-level property of a collection of content items (e.g., images). Once the album is so categorized its metadata may be updated with the appropriate intermediate-level annotations.

The criteria for determining these intermediate-level annotations typically include various possible subcategories. For instance, selfies taken by the image creator are considered original, and images obtained from outside sources but artistically enhanced by the creator may also hold originality value. Non-original images with unique captions may have some degree of originality. Moreover, an album as a whole may exhibit properties that individual images within the album do not possess. For example, although all the images in the album may have watermarks, the creator's arrangement and compilation of the album can give it originality.

With conventional M-LLM models, a two-stage late fusion methodology has been typically employed to address intermediate-level annotation situations like this. This methodology processes different data types (like visual and textual) independently through separate neural networks (NN) before being combined near the model's final layers. In the initial stage, an M-LLM may generate originality predictions for individual images, followed by a decision tree that aggregates these predictions into album-level assessments. However, the second-stage model's loss function cannot optimize first-stage parameters, indirectly optimizing the album-level label. Furthermore, the two-stage late fusion methodology incorrectly assumes independence among multi-round question results, neglecting their inherent logical relationships. Therefore, drawbacks exist with the two-stage late fusion methodology for this predictive task.

An alternative conventional approach involves direct end-to-end prediction, where the model processes complete album data, including images and captions, to determine album-level originality. However, this approach disregards valuable image-level multi-round question-answer information. Therefore, drawbacks also exist with direct end-to-end prediction for this predictive task.

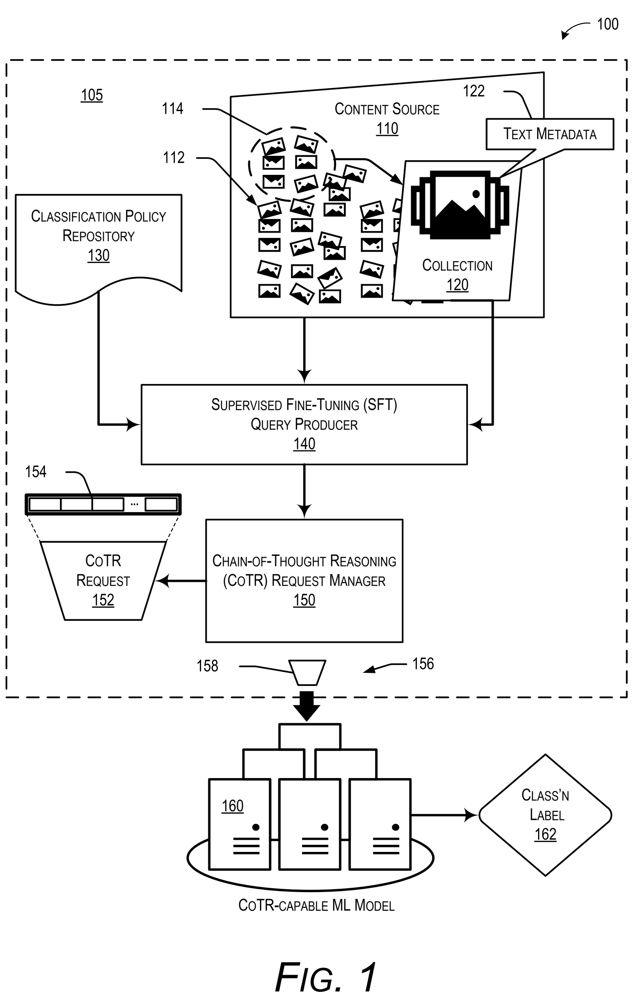

The following embodiments of the present disclosure have been developed to address these issues. FIG. 1 illustrates a schematic view of an operating environment 100 for a computing system 105 in accordance with an example of the present disclosure. As depicted, the operating environment 100 includes a computing system 105 and a chain-of-thought reasoning (CoTR) capable machine-learned (ML) model 160. Computing system 105 includes a content source 110, a classification policy repository 130, a supervised fine-tuning (SFT) query producer 140, and a CoTR request manager 150.

The CoTR-capable ML model 160 is trained (e.g., pre-trained). As depicted, the CoTR-capable ML model 160 works with the computing system 105 but is separate therefrom. In other instances, computing system 105 and the CoTR-capable ML model 160 are integrated together.

Content source 110 includes text-labeled content items of a first type-that is, a common type (e.g., images) amongst the items. The content type of each content item of the content source includes the same type (e.g., images). Typically, content types include text, images, video, and audio information. Thus, the content source 110 can include a collection of text, images, video, or audio content items.

As depicted in the illustrated example, content source 110 includes image content items 112 with labels or captions. Typically, labels are the correct outputs or answers (i.e., ground truth) paired with input data in supervised learning. For images, these are typically categories, tags, or descriptions that identify what the image contains or about attributes of the image.

The content source 110 may be structured or unstructured. Structured datasets (e.g., databases) arrange information in a predefined format like spreadsheets or tables, where each data element follows consistent patterns and rules, making it easily searchable and analyzable. Unstructured datasets contain information that lacks predefined organization or formatting and are often used as training data for LLMs to learn patterns, context, and associations of the content items of the dataset.

As discussed above, images are often organized into "albums"-curated collections used for training data, benchmarks, or domain-specific purposes (medical, art, nature, etc.). Albums can be created manually by humans or automatically by ML models. As used herein, an album may be called a collection or catalog of content of the same type, such as images.

As depicted, a group of images (such as those pooled in dashed circle 114) are collected together into a collection 120, which is a defined association of multiple first-typed content items (e.g., the pooled images 114) of the content source 110. The collection has text metadata 122 associated therewith. Thus, metadata 122 is album- or collection-level metadata. The first type of content may be, for example, at least one of text, videos, audio, or images. That is, the content items of the collection share the same type. In the illustrated example, the first type of content is images.

The text metadata 122 is supplementary textual information associated with the collection 120 that may describe features of the collection itself, common features of pooled images 114, or other helpful attributes related to the collection. The metadata 122 of the collection 120 may include, for example, the collection's name, the identity of the author of the collection, the identity of a modifier of the collection, common or frequent labels of the pooled images 114, common or frequent attributes of the pooled images 114, and other such attributes.

The classification policy repository 130 includes one or more datasets of rules and guidelines-called a policy-related to how content items of a content source (such as content source 110) and collections of such content items (such as collection 120) should be classified (e.g., categorized or organized). Typically, a policy includes, at least partially, human-curated rules and guidelines. A policy may include a structured or unstructured dataset of text-based rules or guidelines that may be used to categorize content items (e.g., data). There are various applications for such policies. Examples of such applications include content moderation, data governance and security (e.g., public, confidential, restricted access), records management (e.g., document retention and regulatory requirements), and storage management (e.g., segregating where and how data is stored based on type, age, and usage).

In one example use case scenario, content management can be the purpose of the policy of the classification policy repository 130 for the computing system 105. Content management is the moderation and organization of user-generated content for online platforms that make sure that the submitted content meets a standard as defined by a content-management policy. That standard may involve avoiding unoriginal content, low quality images, effective labeling to aid retrieval, and the like.

To accomplish this, policies are created to provide guidelines on how to classify content items into classes that are handled differently. For example, suppose that a social media platform specialized in cat videos. A policy for this platform may specify that any video without a cat is excluded and not publicly posted to their platform. Thus, enforcement of that policy would identify any non-cat videos. Thus, such videos are classified as non-cat. Such videos are then excluded from the platform.

Typically, policy enforcement is accomplished manually, automatically, or a combination thereof. For example, a video ML model may be used to classify non-cat videos amongst the nearly uploaded user content. Then, in some instances, a human may review and, if they agree, exclude such videos from the platform.

The supervised fine-tuning (SFT) query producer 140 obtains a classification policy from the classification policy repository 130 and the collection 120 of multiple first-typed content items (e.g., pooled images 114) of the content source 110. The SFT query producer 140 extracts SFT questions from the classification policy from the classification policy repository 130. In addition, the SFT query producer 140 may extract a collection classification task from the classification policy repository 130. In some aspects of the technology described herein, the SFT query producer 140 may receive some or all of the SFT questions and/or the collection classification task from interactions with a human user via a user interface. In addition, the SFT query producer 140 may extract answer tokens (e.g., <AnswerN>) and/or separator tokens (e.g., <S>) for each SFT query and a classification label for the classification task from the classification policy from the classification policy repository 130 and/or from user interaction. In some aspects, the SFT query producer 140 may generate the answer tokens and/or separator tokens.

Based on the obtained classification policy and the collection 120, the SFT query producer 140 produces an SFT query regarding one or more of the first-typed content items (e.g., pooled images 114) of the collection 120 and/or the text metadata 122 of the collection. The SFT queries include answer tokens and questions regarding one or more of the first-typed content items (e.g., pooled images 114) of the collection 120 and a classification task to generate a classification label regarding the collection.

Supervised fine-tuning (SFT) is an ML technique where a pre-trained ML model is further trained using, for example, a curated dataset of input-output pairs to optimize it for specific tasks or behaviors. In this way, the ML model learns to map inputs to desired outputs by minimizing the difference between its predictions and the human-labeled examples in the curated dataset. During SFT, the model's parameters may be adjusted through gradient descent while maintaining much of the knowledge and capabilities gained during pre-training of the ML model. In other instances, SFT may be accomplished using direct preference optimization, instruction tuning, reward modeling, and self-instruction.

In some instances of the technology described herein, the SFT query includes multiple rounds of questions in the chain of thought reasoning regarding one or more of the first-typed content items of collection 120 with the goal of classifying the collection with a particular label that will be associated with the collection. Indeed, the final SFT question in the multiple rounds is called the collection classification task. As a response to the final question the model generates a classification label-such as whether the album is original or non-original.

For example, related to originality, the extracted SFT questions may include the following: ORIGINALITY RUBRIC (SFT QUESTION)

**Table 1**

| SFT Query | SFT Questions | Token |
|---|---|---|
| **Question 1** | Are images selfies? | <Answer1> |
| **Question 2** | Are dates in metadata suspicious? | <Answer2> |
| **...** | ... | ... |
| **Question N** | Images watermarked? | <AnswerN> |
| **Classification Task** | Is the album original or not? | <Label> |

In some instances of the technology described herein, the SFT query includes descriptions of intermediate annotation results (e.g., questions) in the input data with a separator or answer token <ans#> is inserted between each question and the subsequent one. The ML model's output generation for this token represents the corresponding answer to the question. These answers may be used to design loss functions for the intermediate layers. These loss functions may be combined with the end-to-end classification task's loss function to optimize the overall objective (e.g., classification label or final classification) of the model.

In some aspects, the SFT query producer 140 may include the following fields: pixel values of image items of the collection 120; text representations of the text metadata 122 of the collection 120; the target classification label; labels of the intermediate-level questions used for process supervision. The preparation of the intermediate supervision question labels may depend on whether the input is a single image of the collection 120 or the entire collection.

For example, with a single-image scenario, the intermediate results such as "this image has a watermark" are based on single-image annotations. Thus, when the input is a single image, the intermediate results for a data point may be directly encoded as 0/1 based on yes or no labels. Missing values may be excluded from the loss computation.

For example, with a collection-level scenario, the labels for all image-level questions in the collection are aggregated into collection-level labels. For example, the intermediate question could be designed as a regression or classification problem based on the percentage of "yes" answers for question 1 across all images in the album, such as "(0-50%)" or "(50-100%)." Corresponding data is encoded into one-hot vectors based on the number of bins. The number of bins (e.g., 2) determines the length of the one-hot encoding. This approach allows the conversion of image-level intermediate supervision labels into collection-level supervision labels. In some instances, just these converted album-level labels are used during process supervision.

Based on the SFT queries, the CoTR request manager 150 assembles a CoTR request 152 for submission to a CoTR capable ML classifier of, for example, the CoTR-capable ML model 160. As depicted, CoTR request 152 represents an assembled, but not yet submitted request.

The purpose of the CoTR request 152 is to submit the SFT queries to the CoTR-capable ML model 160 in a manner and format that the model accepts for chain-of-thought reasoning. CoTR request 152 is an appropriate formatted and organized package of the SFT queries for submission to the CoTR-capable ML model 160. The particulars of how the SFT queries are packaged into the CoTR request 152 depends upon the particulars of the destination (e.g., the CoTR-capable ML model 160) of the forthcoming submission.

In some instances, a CoTR request 152 may follow one of several established or novel data structures. For example, the instruction-response format includes instruction-output pairs. Dialog-based formats structure data as exchanges between human and assistant roles, capturing conversational patterns. Some formats separate the general task description from specific inputs, while others include example pairs before the main query to provide context.

Structured formats employ defined fields for organizing outputs in a consistent manner. Chain-of-thought formats document reasoning processes by recording intermediate steps leading to final answers. Multi-modal formats combine different data types, such as image paths with text descriptions, to handle tasks involving multiple forms of input.

As shown, in part, at package 154, the CoTR request 152 includes a header and a series of multiple questions and ends with a classification task. Each part may be separated by a separator token and/or an answer token.

In some implementations, the CoTR request manager 150 submits (as indicated at 156) the assembled CoTR request 152 to the CoTR-capable machine-learned (ML) classifier of the CoTR-capable ML model 160. A submitted CoTR request is shown at 158. The submission process may vary depending upon the relationship between the computing system 105 and the CoTR-capable ML model 160.

As depicted, the CoTR-capable ML model 160 works with the computing system 105 but is separate therefrom. In such instances, the submission by the CoTR request manager 150 may include a conversion of the CoTR request into a machine-learning prompt, a proffer of that machine-learning prompt to the CoTR-capable ML model 160 for processing by the CoTR-capable ML classifier, and a reception of the output for a classification label 162 from the ML model.

A machine-learning prompt is an input given to a typically trained machine-learning model that serves as an instruction or query to request a response or a task to be performed by the machine-learning model. Like instructions, the machine-learning prompt guides the model's output. The proffer of the machine-learning prompt may include transmitting such prompt to the ML model so that the model can act on such prompts. Once the ML model has processed the machine-learning prompt, it returns the final classification, which is the classification label of the classification task of the machine-learning prompt.

In other instances, computing system 105 and the CoTR-capable ML model 160 are integrated together. In those instances, the submission by the CoTR request manager 150 may include a conversion of the CoTR request into a machine-learning prompt with embedding representations for the questions and answer tokens. Embedding representations are dense numerical vectors that encode data (such as the questions and answer tokens) into a continuous space where similar items are positioned closer together. These mathematical representations capture meaningful relationships and patterns in the data, making them useful for classification.

The CoTR request manager 150 may a proffer the machine-learning prompt to an attention mechanism of the CoTR-capable ML model 160 for processing by the CoTR-capable ML classifier. An attention mechanism is a neural network component that helps ML models focus on relevant parts of input data when producing output. The mechanism calculates importance weights for different input elements, allowing the ML model to emphasize critical information and reduce focus on less relevant details.

In addition, the CoTR request manager 150 may share hidden states of each question via a multilayer perceptron (MLP) and answer tokens. A MLP is a neural network that consists of multiple layers of artificial neurons connected in sequence: an input layer, one or more hidden layers, and an output layer. Each neuron processes incoming data using weights and an activation function, passing the results forward to create increasingly complex representations of the input data. Hidden states are intermediate representations within an MLP that capture and store information as data flows through the model's layers. They reflect the MLP's learned internal patterns and features at a particular point in time, serving as a form of working memory that helps the model process sequential or complex information.

Further, the CoTR request manager 150 may train a classification head of the CoTR-capable ML model 160 to output a final classification of the collection 120 based on the shared hidden state and the answer tokens. The training of the classification head is the result of the supervised fine-tuning accomplished by the process supervision.

Generally speaking, together the SFT query producer 140 and CoTR request manager may be described as performing process supervision to generate output for a classification label by the ML model by the CoTR request 152. Process supervision directs an ML model to monitor and refine its modeling. The supervision occurs through steps such as task decomposition, output verification, and iterative refinement. The process supervision approach creates a feedback loop where the model's initial output undergoes systematic review before being presented as a final response. In this instance, the hidden states of the answers to each question in the SFT query feedback to the next round in the series of questions.

As the name implies, the CoTR-capable ML model 160 is an ML model-such as an LLM-that is capable of CoTR operation. The CoTR-capable ML model 160 includes a has a CoTR-capable ML classifier, which may include a CoTR-enabled preprocessor. The results of the submitted CoTR request 158.

Using the CoTR operation, the ML model 160 preprocess explicit step-by-step cognitive processes, enabling models to decompose complex tasks into discrete logical components. Typically, the CoTR operation utilizes natural language intermediary steps between the problem statement (e.g., collection classification task) and conclusion (e.g., classification label). In some instances, the CoTR operation is achieved through exemplar-based or question-based prompts-SFT query-that illustrate the reasoning process, thus enhancing the model's capacity for addressing complex reasoning challenges.

The output of the process supervision is the collection classification ("class'n") label 162 as generated by the ML model 160 based upon the submitted CoTR request.

In addition, the CoTR request manager 150 may optimize the output generated for the classification label 162 using a predefined loss function, which may be of the form in Equation 1 below. The loss is a weighted loss with W dominate over $w_i (i \in [1 \cdot 5])$ to ensure end-to-end performance. $w_i$ may be tuned according to the efficiency on process supervision. $l(\cdot)$ can be any self-defined loss function.

$$Loss = W \times l(OUTPUT, LABEL) + \sum_{i=1}^{5} w_i \times l(output_i, label_i)$$

*Equation 1*

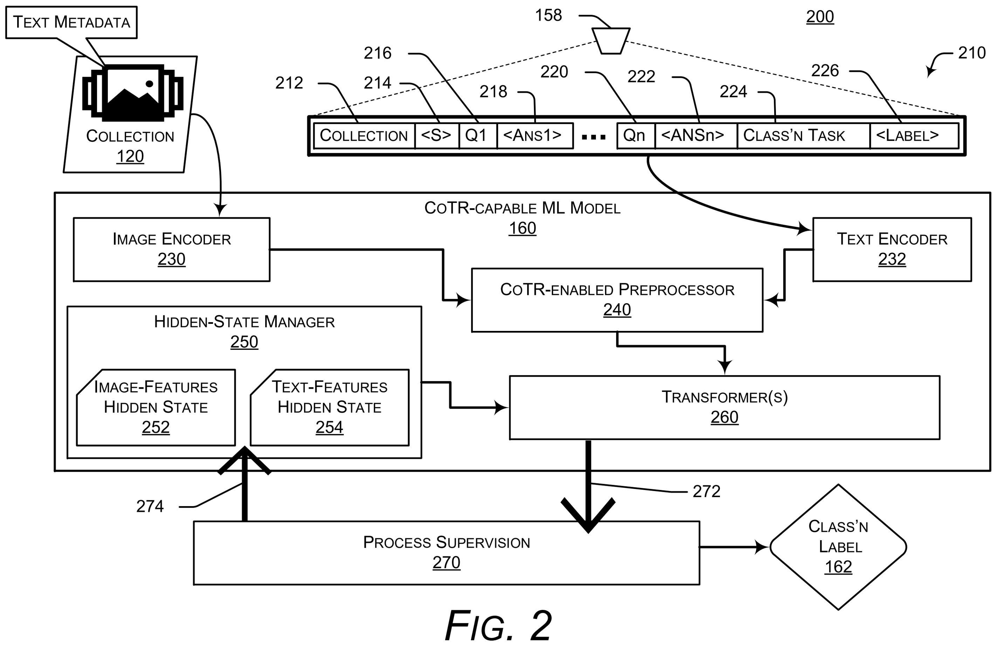

FIG. 2 illustrates a schematic view of a computing system 200 of FIG. 1. As a whole or in part, computing system 200 illustrates an example of a CoTR-capable machine-learned (ML) classifier. Computing system 200 can also be described as showing a portion of the process supervision operation as performed by the CoTR-capable ML model 160 in response to the submitted CoTR request 750. As depicted, the computing system 200 includes the CoTR-capable model 160 and the process supervision component 270.

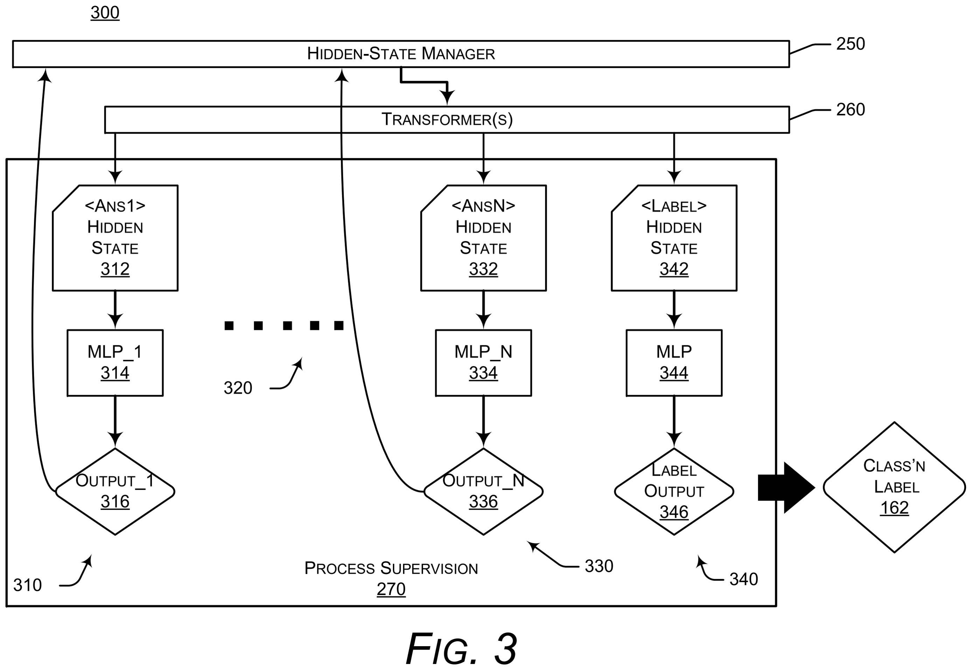

The CoTR-capable ML model 160 includes an image encoder 230, a text encoder 232, a CoTR-enabled preprocessor 240, a hidden-state manager 250, and one or more transformers 260. The details of the process supervision component 270 are described in FIG. 3. The output of the supervision component 270 is the collection classification label 162 as generated by the CoTR-capable ML model 160 based upon the submitted CoTR request 158.

The image encoder 230 receives image input data from the images of the collection 120. The image encoder 230 is a specialized neural network component that converts visual data into a format compatible with the capabilities of the ML model. This may be accomplished by converting input images into sequences of numerical vectors or embeddings that capture visual features, spatial relationships, and semantic content through multiple convolutional neural network layers, progressively extracting hierarchical features from basic elements to complex patterns. The image encoder 230 is typically pre-trained on large image datasets and projects these features into a shared embedding space where those features can be processed alongside text or other content.

The text encoder 232 receives text input data from the submitted CoTR request 158. Text encoder 232 converts raw text into numerical representations through tokenization and embedding processes. The text encoder 232 converts words or subwords into mathematical vectors that capture semantic relationships and linguistic patterns while preserving contextual information through positional encoding and self-attention mechanisms.

The submitted CoTR request 158 is assembled into package 210. As depicted, package 210 illustrates, at least in part, an SFT query assembled into a formatted CoTR request. The content of the package is text. The package 210 includes a header 212, a separator token 214 (e.g., <S>), and a series of multiple questions separated by associated answer tokens. The last question of the series is a classification task 224 with its associated classification label 226 (e.g., <Label>).

As depicted, from right to left, the first element of package 210 is header 212, which contains the text "Collection." This may be an identifying name of the collection 120 or perhaps the process supervision project. The next element in package 210 is a separator or start token 214. The series of multiple questions follow the start token.

As depicted, the first question 216 is designated Q1, but will be a textual question related to process supervision to find the classification label. The text of Q1 216 may be "Are images selfies?" like the same question shown in Table 1. An answer token 218 (e.g., <Ans1>) follows Q1 216 and is associated therewith. An answer token is a unit of text that an ML model generates as part of a response to its associated question.

Next in the sequence is an ellipse, which indicates that there may be several more question-and-answer token pairs in the sequence. Reference numbers 220 and 222 indicate the next question-and-answer token pair shown in FIG. 2: Qn and <AsnN>. The "n" designation indicates how many questions are in the sequence. The text of Qn 220 may be "Images watermarked?" like the same question shown in Table 1.

As depicted, package 210 ends with a collection classification ("class'n") task 224 and its associated label 226 ("<Label> "). The text of the classification task 224 may be, "Is the album original or not?" like that shown in Table 1. The classification task 224 is the last of the questions in the series in package 210, but it has a different name to reflect that the classification task represents the goal of the CoTR request, which is the classification of the collection 120. In some aspects, the associated label 226 may specify the options available for classification. For example, the label options may be "original" or "non-original."

The CoTR-enabled preprocessor 240 receives the image data from the image encoder 230 and textual data from the text encoder 232. The image data is regarding image content items of the collection 120. The textual data is regarding the text of package 210 of the submitted CoTR request 158.

CoTR-enabled preprocessor 240 is a specialized prompt engineering layer within the ML model architecture. CoTR-enabled preprocessor 240 reconstructs input queries (e.g., the submitted CoTR request 158) into structured prompting schemas that enforce explicit reasoning patterns. CoTR-enabled preprocessor 240 employs techniques such as decomposition tokens, reasoning markers, and verification checkpoints to modify the input context window. These modifications restructure the prompt's information architecture to guide the ML model through cognitive steps, leveraging the model's learned patterns of logical reasoning across its weight space. CoTR-enabled preprocessor 240 typically implements this through pattern-matching techniques that identify query types and apply corresponding templated frameworks. This activates the ML model's reasoning capabilities across its attention layers. For example, when processing a complex reasoning task, the CoTR-enabled preprocessor 240 might insert strategic tokens that trigger the model's learned associations with mathematical reasoning, causal analysis, or sequential logic, effectively guiding the activation patterns through the transformer architecture.

This technical approach exploits the ML model's pre-trained understanding of reasoning frameworks while constraining its output generation to follow explicit logical steps, resulting in more consistent propagation of reasoning across the model's layers. CoTR-enabled preprocessor 240 can also implement verification loops that force the model to cross-reference intermediate conclusions against its knowledge base, helping to maintain coherence across longer chains of reasoning.

The hidden-state manager 250 tracks image-features hidden states 252 and text-features hidden states 254 of, as depicted, the image and the text information being processed by the process supervision component 270. Image feature hidden states 252 is an internal neural representation of visual information from the images of the collection 120. The image feature hidden states 252 encode extracted image features into a high-dimensional vector that captures key visual characteristics. Doing so enables process supervision component 270 to maintain and reference visual information while processing subsequent portions of the SFT query of the CoTR request.

Text feature hidden states 254 is an internal neural representation of textual information from package 210 of the CoTR request and/or the metadata text 122 of the collection 120. Text feature hidden states 254 encode processed text features into a high-dimensional vector that captures key linguistic characteristics. In doing so, process supervision component 270 maintains and references textual meaning while generating responses or performing language tasks.

One or more transformers 260 receive the output of the CoTR-enabled preprocessor 240 and the hidden state manager 250. The hidden state manager 250 provides the image-features hidden states and text-features hidden states of the answers to the subsequent questions as they are processed by the process supervision component 270.

One or more transformers 260 and the hidden state manager 250 form a transformer architecture of the ML model. This transformer architecture represents a neural network architecture that processes input sequences through an attention mechanism. The attention mechanism computes relationships between all elements in a sequence, encodes inputs into numerical representations, and processes them through multiple layers.

The hidden-state manager 250 maintains hidden states that capture contextual information across the input sequence. Transformers 260 incorporate each layer's hidden states as increasingly abstract representations of the input data. These hidden states serve as memory mechanisms, allowing the network to maintain and update representations of both short-term and long-term dependencies in the data stream.

In process supervision, transformers 260 process operational data streams by converting multiple input types into mathematical representations, applying self-attention to identify correlations, and generating hidden state representations that capture system dynamics. The hidden states track the evolution of process variables over time. This enables the detection of complex patterns and state transitions. The transformer architecture integrates with control systems by maintaining these hidden state representations while processing new input streams, allowing for continuous updates to the system's understanding of process states and enabling structured output generation mapped to control parameters.

Down arrow 272 shows the direction of output data from transformer 260 to process supervision component 270. Up arrow 274 shows the direction of output data from process supervision component 270 to hidden state manager 250. Arrow 276 between hidden state manager 250 and transformer 260 completes a token-wise generation loop of process supervision. This is discussed further in the context of FIG. 3 below.

FIG. 3 illustrates another schematic view of a token-wise generation loop system 300 utilizing the process supervision component 270 of FIG. 2. The token-wise generation loop system 300 includes the hidden-state manager 250, transformers 260, and the process supervision component 270. As shown, the token-wise generation loop system 300 has multiple token-wise generation subloops, such as loops 310 and 330, and ends with a classification stem 340.

The token-wise generation loop of the token-wise generation loop system 300 analyzes the labeled image content of collection 120 and the text of the SFT query from the CoTR request based on the output of the CoTR-enabled preprocessor 240. A token-wise generation loop operates within transformer architecture by leveraging both self-attention mechanisms, hidden state propagation, and multilayer perceptrons (MLPs) during the sequential generation process. Since the SFT query is a sequence of questions and answer tokens, token-wise generation loop has an iterative subloop for each question/answer pair in the sequence.

As depicted, a first subloop 310 focuses on the pairing of Q1-<Ans1> of the first question 216 and its associated answer token 218 from package 210 of the submitted CoTR request 158. The first subloop 310 includes <Ans1> hidden state 312, Multilayer perceptron 1 ("MLP_1") 314, and output_1 316. As depicted, the hidden-state manager 250 and transformers 260 are part of each subloop.

During token generation of subloop 310 (and each subloop thereafter), the input sequence passes through transformer layers where MLP_1 314 performs non-linear feature transformation. After self-attention computes contextual relationships, the MLP_1 314 processes each token's representations independently and thus transforms features in ways distinct from attention operations. In multi-modal processing of labeled images, visual features move through MLP_1 314 for pattern extraction, while text generation employs MLP_1 314 to transform token representations after attending to visual context and previous tokens.

The <Ans1> hidden state 312 undergo transformation through alternating attention and MLP_1 314 layers, utilizing residual connections and layer normalization for gradient flow. These <Ans1> hidden state 312 then pass through the language model head, producing probability distributions for next-token prediction. This process continues until meeting specified stopping criteria, such as generating an end token or reaching a maximum sequence length. At that point, subloop 310 generates output_1 316.

The ellipse 320 represents additional subloops. There is one subloop for each question-answer token pairing in package 210 of the submitted CoTR request 158. Each subsequent subloop is affected by the previous subloops. The hidden states (e.g., <Ans1> hidden state 312) is the primary way that this occurs.

As depicted, a last subloop 330 focuses on the pairing of QN-<AnsN> of the last question 220 and its associated answer token 222 from package 210 of the submitted CoTR request 158. The last subloop 330 includes <AnsN> hidden state 332, MLP_N 334, and output_N 336. As depicted, the hidden-state manager 250 and transformers 260 are part of this subloop. Being the last question-answer token pairing, the last subloop 330 is affected by all of the previous subloops via the sharing of their hidden states.

The classification stem 340 forms the end of the token-wise generation loop of the token-wise generation loop system 300. The classification stem 340 includes <Label> hidden state 342, MLP 344, and label output 346. The hidden-state manager 250 and transformers 260 are part of classification stem 340. The classification stem 340 is affected by all of the previous subloops via, at least in part, the sharing of their hidden states.

The resulting label output 346 of the classification stem 340 is the collection classification label 162 which is an answer to the question of the classification task 224. Table 1 shows that the question may be, "Is the album original or not?"

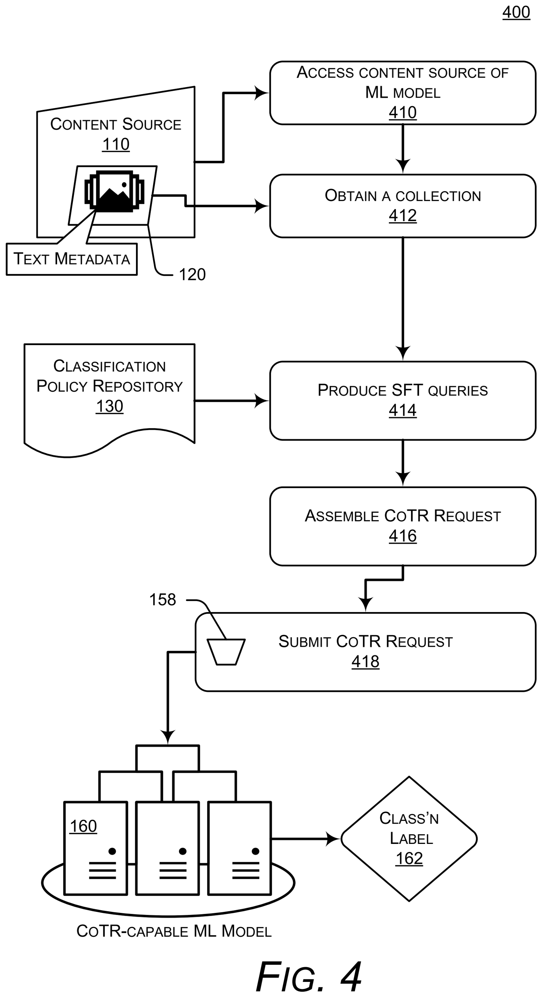

FIGs. 4-6 illustrate flow charts of example methods 400, 500, and 600 for CoTR process supervision according to an example embodiment of the present disclosure. The following descriptions of methods 400, 500, and 600 are described as being performed by a computing system. It will be appreciated that methods 400, 500, and 600 may be performed by the software, hardware, and systems described herein and shown in FIGs. 1-3 and 7 or other contexts using other suitable hardware and software components.

FIG. 4 shows the example method 400 and begins with operation 410. At operation 410, a computing system accesses a content source (e.g., content source 110) of an ML model. The content source includes text-labeled content of a first type, such as images. The first type of content may, for example, text, videos, audio, or images.

At operation 412, the computing system obtains a collection (e.g., collection 120) of multiple first-typed content items of the content source. The collection has text metadata associated therewith.

At operation 414, the computing system produces supervised fine-tuning (SFT) queries regarding the collection based, at least in part, on one or more of the first-typed content items of the collection and/or the text metadata of the collection. The SFT queries include SFT questions and answer tokens regarding one or more of the first-typed content items of the collection and a classification task to generate a classification label regarding the collection.

In some instances, the computing system may receive some or all of the SFT questions and/or a collection classification task from interactions with a human user via a user interface. In other instances, the computing system may extract answer tokens (e.g., <AnswerN>) and/or separator tokens (e.g., <S>) for each SFT query and a classification label for the classification task from a classification policy of a repository, such as the classification policy repository 130.

At operation 416, the computing system, based on the SFT queries, assembles a CoTR request for submission to a CoTR-capable ML classifier, such as that of the CoTR-capable ML model 160.

At operation 418, the computing system submits the assembled CoTR request to the CoTR-capable ML classifier of a ML model, such as CoTR-capable ML model 160. As depicted, a submitted CoTR request is forwarded to the ML model 160. Consequently, the ML model 160 generates a resulting output for the collection classification label 160.

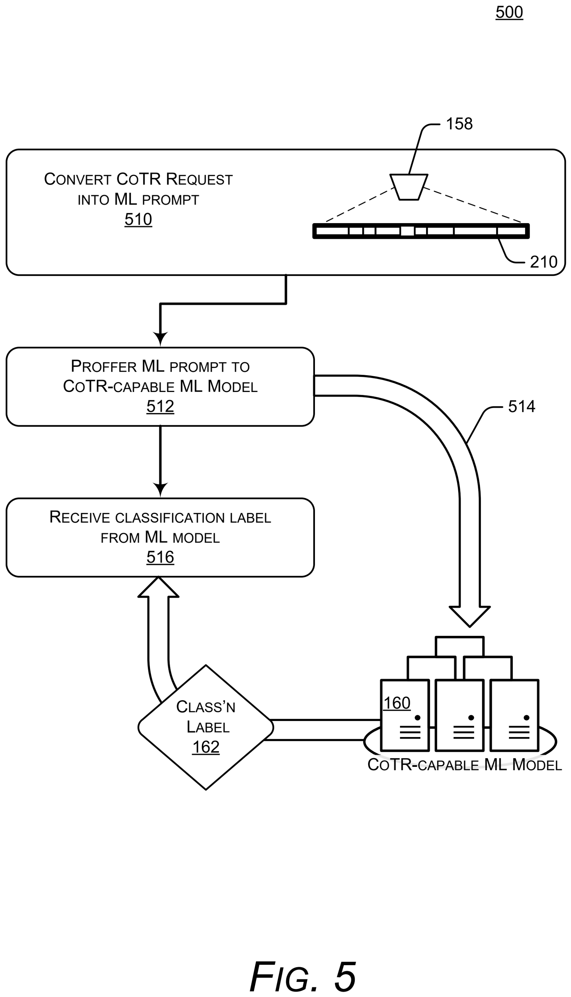

FIG. 5 shows the example method 500 and begins with operation 510. At operation 510, the computing system converts the CoTR request (e.g., CoTR request 158 in package 210) into a machine-learning prompt.

At operation 512, the computing system proffers the machine-learning prompt to the ML model for processing by the CoTR-capable ML classifier of the ML model. This action is illustrated by arrow 514 between operation 512 and the CoTR-capable ML model 160.

At operation 516, the computing system awaits and then receives output for a classification label from the ML model. As depicted, operation 516 receives the classification label 162 as output from the CoTR-capable ML model 160.

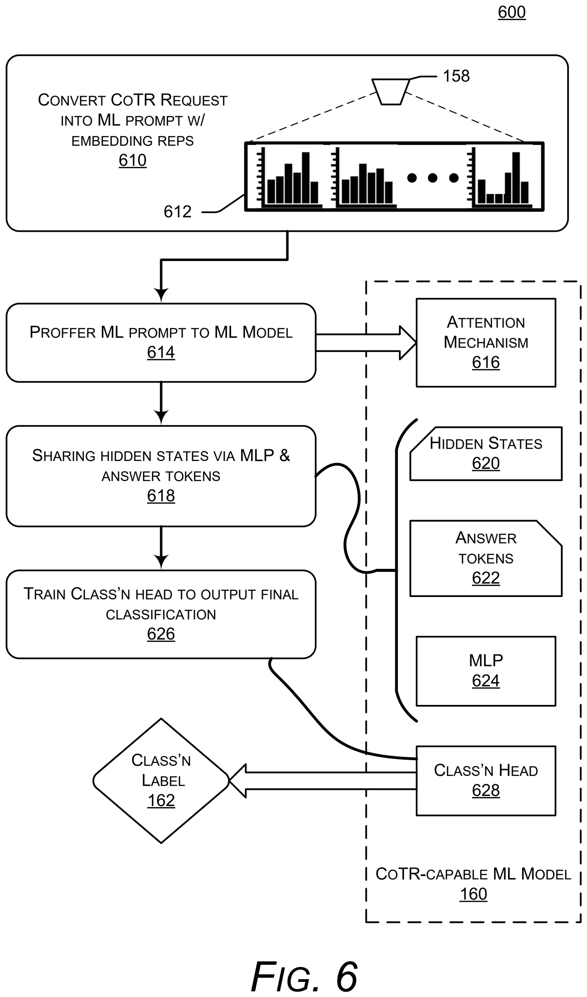

FIG. 6 shows the example method 600 and relevant aspects of the CoTR-capable ML model 160. Those aspects of the CoTR-capable ML model 160 include attention mechanism 616, hidden states 620, answer tokens 622, multilayer perceptron (MLP) 624, and classification head 628.

At operation 610, the computing system converts the CoTR request (e.g., CoTR request 158 in package 210) into a machine-learning prompt with embedding representations for the questions and answer tokens. For illustrative purposes only, embedding representations 612 are shown as a series of histograms.

At operation 614, the computing system proffers the machine-learning prompt to an attention mechanism of the ML model for processing by the CoTR-capable ML classifier of the ML model. As shown, operation 514 proffers the machine-learning prompt to the attention mechanism 616 of the CoTR-capable ML model 160.

At operation 618, the computing system shares hidden states (e.g., hidden states 620) of each question via a MLP (e.g., MLP 624) and answer tokens (e.g., answer tokens 622).

At operation 626, the computing system trains a classification head of the ML model to output a final classification of the collection based on the shared hidden state and the answer tokens. As shown in FIG. 6, the classification head 628 outputs the final classification (e.g., collection classification label 162).

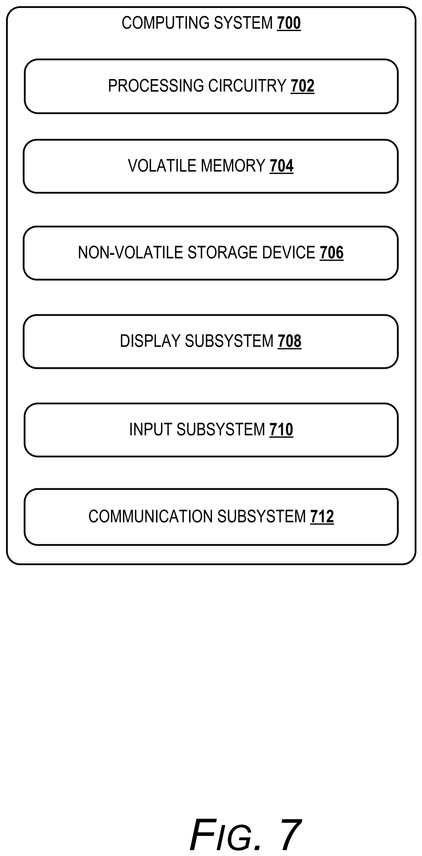

FIG. 7 schematically shows a non-limiting embodiment of a computing system 700 that can enact one or more of the methods and processes described above. Computing system 700 is shown in simplified form. Computing system 700 may embody the computer systems 105 and 200 described above and illustrated in FIGs. 1-3. Computing system 700 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 700 includes a logic processor 702 volatile memory 704, and a non-volatile storage device 706. Computing system 700 may optionally include a display subsystem 708, input subsystem 710, communication subsystem 712, and/or other components not shown in FIG. 7.

Logic processor 702 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 702 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Non-volatile storage device 706 includes one or more physical devices configured to hold instructions executable by the logic processors to implement the methods and processes described herein. When such methods and processes are implemented, the state of non-volatile storage device 706 may be transformed-e.g., to hold different data.

Non-volatile storage device 706 may include physical devices that are removable and/or built-in. Non-volatile storage device 706 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 706 may include nonvolatile, dynamic, static, read/write, read-only, sequential-access, location-addressable, file-addressable, and/or content-addressable devices. It will be appreciated that non-volatile storage device 706 is configured to hold instructions even when power is cut to the non-volatile storage device 706.

Volatile memory 704 may include physical devices that include random access memory. Volatile memory 704 is typically utilized by logic processor 702 to temporarily store information during processing of software instructions. It will be appreciated that volatile memory 704 typically does not continue to store instructions when power is cut to the volatile memory 704.

Aspects of logic processor 702, volatile memory 704, and non-volatile storage device 706 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 700 typically implemented in software by a processor to perform a particular function using portions of volatile memory, which function involves transformative processing that specially configures the processor to perform the function. Thus, a module, program, or engine may be instantiated via logic processor 702 executing instructions held by non-volatile storage device 706, using portions of volatile memory 704. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 708 may be used to present a visual representation of data held by non-volatile storage device 706. The visual representation may take the form of a graphical user interface (GUI). As the herein described methods and processes change the data held by the non-volatile storage device, and thus transform the state of the non-volatile storage device, the state of display subsystem 708 may likewise be transformed to visually represent changes in the underlying data. Display subsystem 708 may include one or more display devices utilizing virtually any type of technology. Such display devices may be combined with logic processor 702, volatile memory 704, and/or non-volatile storage device 706 in a shared enclosure, or such display devices may be peripheral display devices.

When included, input subsystem 710 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included communication subsystem 712 may be configured to communicatively couple various computing devices described herein with each other, and with other devices. Communication subsystem 712 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 700 to send and/or receive messages to and/or from other devices via a network such as the Internet.

The following paragraphs provide additional description of the subject matter of the present disclosure. In one aspect, a process supervision system is provided, comprising: processing circuitry and memory of a computing device operatively coupled to the processor and storing a content source of a machine-learned (ML) model, the content source including text-labeled content of a first type; the memory storing instructions that, when executed, cause the processing circuitry to: obtain a collection of multiple first-typed content items of the content source, the collection having text metadata associated therewith; produce supervised fine-tuning (SFT) queries regarding the collection based, at least in part, on one or more of the first-typed content items of the collection and/or the text metadata of the collection; based on the SFT queries, assemble a chain-of-thought reasoning request for submission to a chain-of-thought reasoning capable ML classifier.

In this aspect, the first type of content can be selected from the group consisting of text, videos, audio, and images.

In this aspect, the SFT queries can include questions and answer tokens regarding one or more of the first-typed content items of the collection and a classification task to generate a classification label regarding the collection by the chain-of-thought reasoning capable ML classifier.

In this aspect, the processing circuitry can be further configured to receive the questions and the classification task from a user interface with a user.

In this aspect, the processing circuitry can be further configured to obtain a classification policy; and extract the questions and the classification task from the classification policy.

In this aspect, the chain-of-thought reasoning capable ML classifier can be part of a multi-modal large language model (M-LLM).

In this aspect, the processing circuitry can be further configured to submit the assembled chain-of-thought reasoning request to the chain-of-thought reasoning capable ML classifier of the ML model.

In this aspect, the processing circuitry can be further configured to perform process supervision to generate output for a classification label by the ML model by the chain-of-thought reasoning request.

In this aspect, the processing circuitry can be further configured to cause further optimization of the output generated for the classification label using a predefined loss function.

In this aspect, the processing circuitry can be further configured to convert the chain-of-thought reasoning request into a machine-learning prompt; proffer the machine-learning prompt to the ML model for processing by the chain-of-thought reasoning capable ML classifier; and receive output for a classification label from the ML model.

In this aspect, the processing circuitry can be further configured to convert the chain-of-thought reasoning request into a machine-learning prompt with embedding representations for the questions and answer tokens; proffer the machine-learning prompt to an attention mechanism of the ML model for processing by the chain-of-thought reasoning capable ML classifier; share hidden states of each question via a multilayer perceptron (MLP) and answer tokens; and train a classification head of the ML model to output a final classification of the collection based on the shared hidden state and the answer tokens.

According to another aspect, a method that facilitates process supervision is provided, comprising: accessing a content source of a machine-learned (ML) model, the content source including text-labeled content of a first type; obtaining a collection of multiple first-typed content items of the content source, the collection having text metadata associated therewith; producing supervised fine-tuning (SFT) queries regarding the collection based, at least in part, on one or more of the first-typed content items of the collection and/or the text metadata of the collection; and based on the SFT queries, assembling a chain-of-thought reasoning request for submission to a chain-of-thought reasoning capable ML classifier.

In this aspect, the first type of content can be selected from the group consisting of text, videos, audio, and images.

In this aspect, the SFT queries can include questions and answer tokens regarding one or more of the first-typed content items of the collection and a classification task to generate a classification label regarding the collection by the chain-of-thought reasoning capable ML classifier.

In this aspect, the method can further comprise: obtaining a classification policy; and extracting the questions and the classification task from the classification policy.

In this aspect, the method can further comprise: submitting the assembled chain-of-thought reasoning request to the chain-of-thought reasoning capable ML classifier of the ML model.

In this aspect, the method can further comprise: converting the chain-of-thought reasoning request into a machine-learning prompt; proffering the machine-learning prompt to the ML model for processing by the chain-of-thought reasoning capable ML classifier; and receiving a classification label from the ML model.

In this aspect, the method can further comprise: converting the chain-of-thought reasoning request into a machine-learning prompt with embedding representations for the questions and answer tokens; proffering the machine-learning prompt to an attention mechanism of the ML model for processing by the chain-of-thought reasoning capable ML classifier; sharing hidden states of each question via a multilayer perceptron (MLP) and answer tokens; and training a classification head of the ML model to output a final classification of the collection based on the shared hidden state and the answer tokens.

In this aspect, a computer-readable storage medium can be provided that comprises instructions that, responsive to execution by a processor, cause a process supervision system to perform the method.

According to another aspect, a process supervision system is provided, comprising: processing circuitry and memory of a computing device operatively coupled to the processor and storing a content source of a machine-learned (ML) model, the content source including text-labeled content of a first type; the memory storing instructions that, when executed, cause the processing circuitry to: obtain a classification policy and a collection of multiple first-typed content items of the content source, the collection having text metadata associated therewith; produce supervised fine-tuning (SFT) queries regarding the collection based, at least in part, on one or more of the first-typed content items of the collection and/or the text metadata of the collection, wherein the SFT queries include questions and answer tokens regarding one or more of the first-typed content items of the collection and a classification task to generate a classification label regarding the collection by the chain-of-thought reasoning capable ML classifier, wherein the SFT query production includes extraction of the questions and the classification task from the classification policy; assemble a chain-of-thought reasoning request for submission to a chain-of-thought reasoning capable ML classifier by packaging the questions and answer tokens and the classification task; and submit the assembled chain-of-thought reasoning request to the chain-of-thought reasoning capable ML classifier of the ML model.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

**EP 4 760 541 A1**

**Claims**

1. A process supervision system comprising:

processing circuitry and memory of a computing device operatively coupled to the processor and storing a content source of a machine-learned, ML, model, the content source including text-labeled content of a first type; the memory storing instructions that, when executed, cause the processing circuitry to:

obtain a collection of multiple first-typed content items of the content source, the collection having text metadata associated therewith;
produce supervised fine-tuning, SFT, queries regarding the collection based, at least in part, on one or more of the first-typed content items of the collection and/or the text metadata of the collection;
based on the SFT queries, assemble a chain-of-thought reasoning request for submission to a chain-of-thought reasoning capable ML classifier.

2. The process supervision system of claim 1, wherein the first type of content is selected from the group consisting of text, videos, audio, and images.

3. The process supervision system of claim 1, wherein the SFT queries include questions and answer tokens regarding one or more of the first-typed content items of the collection and a classification task to generate a classification label regarding the collection by the chain-of-thought reasoning capable ML classifier.

4. The process supervision system of claim 3, wherein the instructions further cause the processing circuitry to: receive the questions and the classification task from a user interface with a user.

5. The process supervision system of claim 3, wherein the instructions further cause the processing circuitry to:

obtain a classification policy; and
extract the questions and the classification task from the classification policy.

6. The process supervision system of claim 1, wherein the chain-of-thought reasoning capable ML classifier is part of a multi-modal large language model, M-LLM.

7. The process supervision system of claim 1, wherein the instructions further cause the processing circuitry to: submit the assembled chain-of-thought reasoning request to the chain-of-thought reasoning capable ML classifier of the ML model.

8. The process supervision system of claim 1, wherein the instructions further cause the processing circuitry to: perform process supervision to generate output for a classification label by the ML model by the chain-of-thought reasoning request.

9. The process supervision system of claim 7, wherein the instructions further cause the processing circuitry to: cause further optimization of the output generated for the classification label using a predefined loss function.

10. The process supervision system of claim 1, wherein the instructions further cause the processing circuitry to:

convert the chain-of-thought reasoning request into a machine-learning prompt;
proffer the machine-learning prompt to the ML model for processing by the chain-of-thought reasoning capable ML classifier; and
receive output for a classification label from the ML model.

11. The process supervision system of claim 3, wherein the instructions further cause the processing circuitry to:

convert the chain-of-thought reasoning request into a machine-learning prompt with embedding representations for the questions and answer tokens;
proffer the machine-learning prompt to an attention mechanism of the ML model for processing by the chain-of-thought reasoning capable ML classifier;
share hidden states of each question via a multilayer perceptron, MLP, and answer tokens; and

train a classification head of the ML model to output a final classification of the collection based on the shared hidden state and the answer tokens.

12. A method that facilitates process supervision, the method comprising:

accessing (410) a content source of a machine-learned, ML, model, the content source including text-labeled content of a first type;
obtaining (412) a collection of multiple first-typed content items of the content source, the collection having text metadata associated therewith;
producing (414) supervised fine-tuning, SFT, queries regarding the collection based, at least in part, on one or more of the first-typed content items of the collection and/or the text metadata of the collection; and
based on the SFT queries, assembling (416) a chain-of-thought reasoning request for submission to a chain-of-thought reasoning capable ML classifier.

13. A computer-readable storage medium comprising instructions that, responsive to execution by a processor, cause a process supervision system to perform the method of claim 12.

14. A process supervision system comprising:

processing circuitry and memory of a computing device operatively coupled to the processor and storing a content source of a machine-learned, ML, model, the content source including text-labeled content of a first type;
the memory storing instructions that, when executed, cause the processing circuitry to:

obtain a classification policy and a collection of multiple first-typed content items of the content source, the collection having text metadata associated therewith;
produce supervised fine-tuning, SFT, queries regarding the collection based, at least in part, on one or more of the first-typed content items of the collection and/or the text metadata of the collection, wherein the SFT queries include questions and answer tokens regarding one or more of the first-typed content items of the collection and a classification task to generate a classification label regarding the collection by the chain-of-thought reasoning capable ML classifier, wherein the SFT query production includes extraction of the questions and the classification task from the classification policy;
assemble a chain-of-thought reasoning request for submission to a chain-of-thought reasoning capable ML classifier by packaging the questions and answer tokens and the classification task; and
submit the assembled chain-of-thought reasoning request to the chain-of-thought reasoning capable ML classifier of the ML model.

*FIG. 1*

*FIG. 2*

**300**

HIDDEN-STATE MANAGER — 250

TRANSFORMER(S) — 260

<ANS1> HIDDEN STATE **312**

MLP_1 **314**

OUTPUT_1 **316**

320

<ANSN> HIDDEN STATE **332**

MLP_N **334**

OUTPUT_N **336**

<LABEL> HIDDEN STATE **342**

MLP **344**

LABEL OUTPUT **346**

CLASS'N LABEL **162**

310

PROCESS SUPERVISION **270**

330

340

FIG. 3

400

CONTENT SOURCE
110

TEXT METADATA

120

ACCESS CONTENT SOURCE OF
ML MODEL
410

OBTAIN A COLLECTION
412

CLASSIFICATION
POLICY REPOSITORY
130

PRODUCE SFT QUERIES
414

ASSEMBLE CoTR REQUEST
416

158

SUBMIT CoTR REQUEST
418

160

CLASS'N
LABEL
162

CoTR-CAPABLE ML MODEL

*FIG. 4*

500

CONVERT CoTR REQUEST
INTO ML PROMPT
510

158

210

PROFFER ML PROMPT TO
CoTR-CAPABLE ML MODEL
512

514

RECEIVE CLASSIFICATION LABEL
FROM ML MODEL
516

CLASS'N
LABEL
162

160

CoTR-CAPABLE ML MODEL

FIG. 5

600

CONVERT CoTR REQUEST INTO ML PROMPT W/ EMBEDDING REPS
610

158

612

PROFFER ML PROMPT TO ML MODEL
614

ATTENTION MECHANISM
616

SHARING HIDDEN STATES VIA MLP & ANSWER TOKENS
618

HIDDEN STATES
620

ANSWER TOKENS
622

TRAIN CLASS'N HEAD TO OUTPUT FINAL CLASSIFICATION
626

MLP
624

CLASS'N LABEL
162

CLASS'N HEAD
628

CoTR-CAPABLE ML MODEL
160

FIG. 6

COMPUTING SYSTEM **700**

PROCESSING CIRCUITRY **702**

VOLATILE MEMORY **704**

NON-VOLATILE STORAGE DEVICE **706**

DISPLAY SUBSYSTEM **708**

INPUT SUBSYSTEM **710**

COMMUNICATION SUBSYSTEM **712**

*FIG. 7*

**EUROPEAN SEARCH REPORT**

Application Number

EP 25 22 2428

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Surla Annie ET AL: "An Easy Introduction to Multimodal Retrieval-Augmented Generation", NVIDIA Blog, 20 March 2024 (2024-03-20), pages 1-13, XP093360180, Retrieved from the Internet: URL:https://developer.nvidia.com/blog/an-easy-introduction-to-multimodal-retrieval-augmented-generation [retrieved on 2026-01-30] * page 6 - page 8 * ----- | 1-14 | INV. G06F16/906 |
| | | | TECHNICAL FIELDS SEARCHED (IPC) |
| | | | G06F |

The present search report has been drawn up for all claims

| Place of search | Date of completion of the search | Examiner |
|---|---|---|
| The Hague | 30 January 2026 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)